# EUROPEAN PATENT APPLICATION

(11) **EP 2 060 546 A1**
(43) Date of publication of application: **20.05.2009**
(21) Application number: 07425716.3
(22) Date of filing: 13.11.2007
(51) Int. Cl.: C03C 17/00, B32B 17/10, G06K 19/06, G06K 7/10, B41M 3/14, B60R 13/10

(54) **Vehicle glazing**

(71) Applicant: Pilkington Italia S.p.A., 66050 San Salvo (CH) (IT)
(72) Inventor: Gagliardi, Giovanni, 66054 Vasto (CH) (IT); Nanni, Carmine, 66052 Gissi (CH) (IT); Gigante, Giulio, 65126 Pescara (PE) (IT); Digiambattista, Filippo Antonino, 66054 Vasto (CH) (IT)
(74) Representative: Germinario, Claudio

(57) **Abstract**

A vehicle glazing comprising at least one pane of glazing material (e.g. glass) having a band of opaque ink (e.g. a black obscuration band) printed on one of its surfaces adjacent at least one of its edges, and an information-containing print (e.g. a black bar code), printed on a surface of the glazing so as to coincide with the band of opaque ink, which is substantially invisible against the opaque ink. Also a method of providing a vehicle glazing with an information-containing print and a method of retrieving information from such a vehicle glazing by: passing a device capable of reading printed information (e.g. a bar code reader) over the surface of the glazing in the region of the band of opaque ink; detecting the substantially invisible information-containing print; and reading the information contained in the information-containing print.

## Description

The present invention relates to a substrate, especially to a vehicle glazing, provided with an information-containing print, to a method of providing such a vehicle glazing and to a method of retrieving information from such a substrate, especially a vehicle glazing.

In the production and sale of many commercial items including vehicle glazings, it is desirable to be able to track an item/glazing during its lifetime from its manufacture through to its sale, for example to a vehicle manufacturer, for a number of reasons including those of quality control, warranty return issues and general logistics.

Many solutions have been proposed to enable tracking of a vehicle glazing. One example can be found in EP 1 698 455 A1 which describes a laminated vehicle glazing that includes a radio-frequency identification (RFID) tag within in. The RFID tag is held in place by a ply of laminating interlayer material joining together two plies of glass. The tag stores inputted, retrievable information about the glazing.

Another example can be found in US 2006/0159852 A1 which describes a monolithic vehicle glazing provided with a non-digital image, in the form of a screen-printed obscuration band, around the periphery of the glass, and a digital image, in the form of an electro-photographically printed identification code, on a different part of the glass surface. The obscuration band is printed using an opaque (black) ink, whilst the identification code is printed using a coloured ceramic ink which is permanently fired into the glass surface. The digital image must be fired at temperatures of at least 700 °C for at least 3 minutes to permanently fix it onto the surface of the glass.

In seeking to provide an alternative solution to those provided in the prior art, the present inventors found that it was possible to simplify the method used to produce a aesthetically pleasing glazing which is capable of being reliably tracked over its lifetime.

Accordingly, the present invention provides a vehicle glazing comprising:
at least one pane of glazing material having a band of opaque ink printed on one of its surfaces adjacent at least one of its edges, and
an information-containing print, printed on a surface of the glazing so as to coincide with the band of opaque ink, which is substantially invisible against the opaque ink.

There are a number of benefits associated with a glazing according to the invention over prior art glazings, including firstly that the present glazing does not require inclusion of sophisticated, expensive technology such as an RFID tag and so it is cheaper to manufacture.

Secondly, the present glazing does not require use of a coloured ceramic ink on a portion of the surface of the glazing where it would be clearly visible to a human eye. The information-containing print comprised in the present glazing coincides with the opaque band so that it is substantially invisible.

The word "print" and associated words when used throughout this specification and claims encompasses all means of applying the desired information onto the surface of the glazing, unless stated otherwise. The phrase "substantially invisible" when used throughout this specification and claims means that the information-containing print ink preferably does not show up *at all* to a human eye against the background opaque ink, but it may be that the information-containing print ink is just discernible to the human eye, for example under certain lighting conditions and/or at an off-angle (less than 90° to the surface of the glazing). In both cases though the information-containing print is preferably clearly readable by a device employed for doing so, as will be described in more detail later.

The colours (hues) of the opaque ink and the information-containing print ink may be the same, but maybe not *exactly* the same. If the inks are of *exactly* the same colour (hue) then the information-containing print may be completely invisible against the opaque ink. However there may be differences in shading/tinting/glossiness between the two inks which mean that when viewed up close (for example at an arm's length away) the information-containing print may be just discernible against the background opaque ink.

Preferably both the opaque ink and the information-containing print ink are black in colour. For vehicle glazings, black is currently thought to be the most aesthetically pleasing. The information-containing print may alternatively be a photoactive ink, such as a UV-responsive ink, which only becomes visible to the naked eye when it is irradiated with light of a particular wavelength, e.g. ultraviolet (UV) light.

The information-containing print may advantageously be in the form of a machine-readable bar code. A bar code may be able to encode lots of different information about a glazing such as its production batch number, the date, time and location of its production, its item number, the destination-vehicle make and model, etc.. In addition to, or as an alternative to a bar code, the information-containing print may be in the form of a numeric code, an alphanumeric code, a data-matrix and/or a character code (for example using Latin, Cyrillic or Asiatic characters).

Typically the band of opaque ink may be a screen-print, and it may be in the form of an obscuration band which extends around the entire periphery of the glazing. Enamel may be used to screen-print the band. The band may be solid (i.e. with no discontinuities in it) and/or it may include discontinuities, e.g. in the form of a dot fade-out pattern. An obscuration band is a useful feature of a vehicle glazing because it may disguise and protect the sealant used to fix the glazing into a vehicle window opening.

Preferably the information-containing print is a digital print. A digital print is a reproduction of a digital image on a physical surface, in this case a pane of glazing material. A digital image is a pixelated representation of a two-dimensional image that may be created and stored in an electronic medium, for example on a computer. For the avoidance of doubt, a screen-print (as referred to in this specification and claims) is a non-digital print, which is usually formed using a silk-screen stencil. The digital print is preferably an industrial ink-jet print, and the ink used may be that typically recommended for use with the corresponding industrial ink-jet printer by the supplier.

Preferably the pane of glazing material is a pane of soda-lime-silica glass which may be clear or body-tinted, depending on the aesthetics required by the vehicle manufacturers and relevant legislation regarding visible light transmittance of a glazing in its destination country. Alternatively it may be a pane of a rigid plastics material such as polycarbonate.

The glazing may be in the form of a monolith wherein the information-containing print is printed upon the surface of the band of opaque ink. A monolithic glazing, which if made of glass may also be tempered, may ordinarily have the band of opaque ink printed on its innermost surface (with respect to its orientation when installed in a vehicle) so as to protect the print from environmental degradation external to the vehicle. The information-containing print may be indirectly printed on the innermost surface of the glazing, on the band of opaque ink, so that it too is protected. A ply of plastics material, especially an anti-spall material, may be adhered to a surface of the monolith (preferably to the printed surface) to form a bilayer safety glazing.

Alternatively, the glazing may be in the form of a laminate comprising at least one further pane of glazing material (of the type described above), wherein the information-containing print and the band of opaque ink are printed on separate panes of glazing material, such that when paired, the information-containing print coincides with and lies within the area of the band of opaque ink. Conventionally (for ease of reference) the surfaces of a laminated glazing are described as follows: the outermost surface of the glazing (with respect to its orientation when installed in a vehicle) is labelled surface 1, the inner surface of outer pane as surface 2, the outer surface of inner pane as surface 3 and the innermost surface of the glazing as surface 4.

If the band of opaque ink is printed on surface 2 of the glazing, the information-containing print may be printed on surface 3 or surface 4. If the band of opaque ink is printed on surface 4 of the glazing, the information-containing print may be printed on surface 2 or surface 3 of the glazing. In both cases, the two prints coincide such that the information-containing print is substantially invisible against the background opaque band, and are protected from the external environment.

Further alternatively, the glazing may be in the form of a laminate comprising at least one further pane of glazing material (of the type described above), wherein the information-containing print is printed upon the surface of the band of opaque ink. Both may be printed on surface 2 of the glazing, however both are preferably printed on surface 4. When the latter, there may be a further corresponding band of opaque ink printed on surface 2 or surface 3. In both cases, the two prints coincide so that the information-containing print is substantially invisible against the background opaque band.

Typically the glazing may be bent, i.e. it may have curvature in one or more directions. Surprisingly, it was found that the information-containing print is still device-readable (as will be described in more detail below) despite any distortion that it may undergo as a result of the glazing being bent.

According to a second aspect of the invention there is provided a method of providing a vehicle glazing with an information-containing print, the glazing comprising at least one pane of glazing material and the method comprising the steps of:
- printing a band of opaque ink on a surface of a pane of glazing material adjacent at least one of its edges; and
- printing an information-containing print on a surface of the glazing, so as to coincide with the band of opaque ink, using an ink that is substantially invisible against the opaque ink.

This method is simple to perform, it is cheap to implement and it has the necessary reliability required for a large scale production technique. Specifically compared to known prior art methods, the method of the invention does not involve incorporation of a sophisticated memory device such as an RFID tag into the glazing (as is described in EP 1 698 455 A1), nor does it required the additional, costly firing step of US 2006/0159852 A1 to permanently fire the identification code into the surface of the glazing.

Preferably the band of opaque ink is screen-printed onto the pane of glazing material (a non-digital printing technique). Typically the band may be in the form of an obscuration band, which may be solid and/or include discontinuities. Preferably the information-containing print is digitally printed, and further preferably using ink-jet printing.

The colours (hues) of the opaque ink and the information-containing print ink may be the same, but maybe not *exactly* the same. If the inks are of *exactly* the same colour (hue) then the information-containing print may be completely invisible against the opaque ink. However there may be differences in shading/tinting/glossiness between the two inks which mean that when viewed up close (for example at an arm's length away) the information-containing print may be just discernible against the background opaque ink. Preferably both the opaque ink and the digitally printed ink are black in colour, although the digitally printed ink may be a photoactive ink, as mentioned earlier.

The information-containing print may advantageously be in the form of a machine-readable bar code, which may encode a wealth of information about the glazing, as discussed earlier. In addition to, or as an alternative to a bar code, the information-containing print may be in the form of a numeric code, an alphanumeric code, a data-matrix and/or a character code (for example using Latin, Cyrillic or Asiatic characters).

Prior to screen-printing the band of opaque ink, the pane of glazing material may be cut to a desired shape. This may be an especially useful step when the band is in the form of an obscuration band - it may enable accurate printing of the obscuration band around the periphery of the cut-pane.

Beneficially in a step prior to digitally printing the information-containing print, the pane of glazing material may be bent and/or tempered. The elevated temperature required in the performance of a bending and/or tempering process is often enough to fire the ink of the opaque band, especially when this ink is enamel. It should be noted that firing of the information-containing print ink is a step that specifically is not required, especially when the ink used in a standard industrial ink-jet printing ink.

The glazing may be in the form of a monolith and the information-containing print may be digitally printed upon the surface of the band of opaque ink. The band of opaque ink may be printed onto the innermost surface of the glazing (with respect to its orientation when installed in a vehicle), and the information-containing print may be printed upon this band, indirectly on the innermost surface of the glazing. Alternatively, the glazing may be a bilayer safety glazing, as discussed earlier.

Preferably the monolithic pane of glazing material is paired with a further pane of glazing material to form a laminate. Both the opaque band and the information-containing print may be printed on surface 2 of the glazing, however both are preferably printed on surface 4. When the latter, there may be a further corresponding band of opaque ink printed on surface 2 or surface 3. In both cases, the two prints coincide so that the information-containing print is substantially invisible against the background opaque band.

The glazing may be a laminate, but in an alternative to that described above, the band of opaque ink and the information-containing print may be printed on separate panes of glazing material such that when paired in the final laminate, the information-containing print coincides with and lies within the area of the band of opaque ink. If the band of opaque ink is printed on surface 2 of the glazing, the information-containing print may be printed on surface 3 or surface 4. If the band of opaque ink is printed on surface 4 of the glazing, the information-containing print may be printed on surface 2 or surface 3 of the glazing. In both cases, the two prints coincide such that the information-containing print is substantially invisible against the background opaque band, and are protected from the external environment.

Advantageously digital printing of the information-containing print occurs subsequent to autoclaving of the laminate. Thus no additional firing of the ink for the digital print is required, and so the process is less expensive that prior art processes because less energy is consumed by it.

In addition to the foregoing, the present invention also provides in a third aspect a method of retrieving information from a vehicle glazing according to the invention comprising the steps of:
- passing a device capable of reading printed information over the surface of the glazing in the region of the band of opaque ink;
- detecting the substantially invisible information-containing print comprised in the glazing; and
- reading the information contained in the information-containing print.

Because the information-containing print is substantially invisible, the device may have to be passed over more or less of the band of opaque ink before it detects the print and subsequently reads it. However, this is a consequence of the overall glazing remaining aesthetically pleasing (due to the fact that the information-containing print is effectively invisible to a human eye, as described earlier).

A device which is particularly suitable for this task is a reader which works cooperatively with a laser scanning unit. Illumination and detection by this device may work according to a "dark-field" operating principle. In dark-field operation, a cone of light emitted by the laser scanning unit, for illumination of the glazing, is emitted and incident on the glazing at an angle which is not normal to the glazing. The angle may be chosen such that the cone of specularly reflected light from the surface of the band of opaque ink (which may typically be glossy) is not detected and collected by the optics of the reader, but incident light scattered from the surface of the information-containing print is.

Preferably the information-containing print is a bar code and the device is a laser bar code scanner. The scanner appears to be able to successfully retrieve information from the information-containing print - this is surprising because bar code readers usually specify a minimum amount of contrast between the dark lines of a bar code and its intermediate white spaces.

The bar code is preferably encoded according to European Article Number (EAN) barcode standard EAN-13, which is compatible with many bar code scanners and so could be easily read on a global basis.

One especially useful (direct illumination) bar code scanner comprises a 650 nm visible laser diode as its light source. This wavelength appears to be compatible with the information-containing print of a glazing according to the invention.

Although all aspects of the invention in this specification and claims have been described with reference to a vehicle glazing, it will be obvious to the skilled man that the invention has a wider applicability, in that it is possible to perform the invention in other fields, such as packaging and labelling, in much the same manner as described for a vehicle glazing.

Accordingly the present invention also provides a substrate comprising:
an information-containing print provided on a surface of the substrate in a locating area designated for said print,
wherein the print is substantially invisible against the locating area.

Furthermore the present invention provides a method of retrieving information from the substrate described in the preceding paragraph comprising the steps of:
- passing a device capable of reading printed information over a surface of the substrate in the region of the locating area;
- detecting the substantially invisible information-containing print comprised in the substrate; and
- reading the information contained in the information-containing print.

For a better understanding the present invention will now be more particularly described by way of non-limiting example with reference to, and as shown in, the accompanying schematic drawings (not to scale) wherein:
Figure 1 is a plan view of a vehicle glazing according to the invention, and
Figure 2 is a cross section viewed along line A-A of the glazing shown in Figure 1.

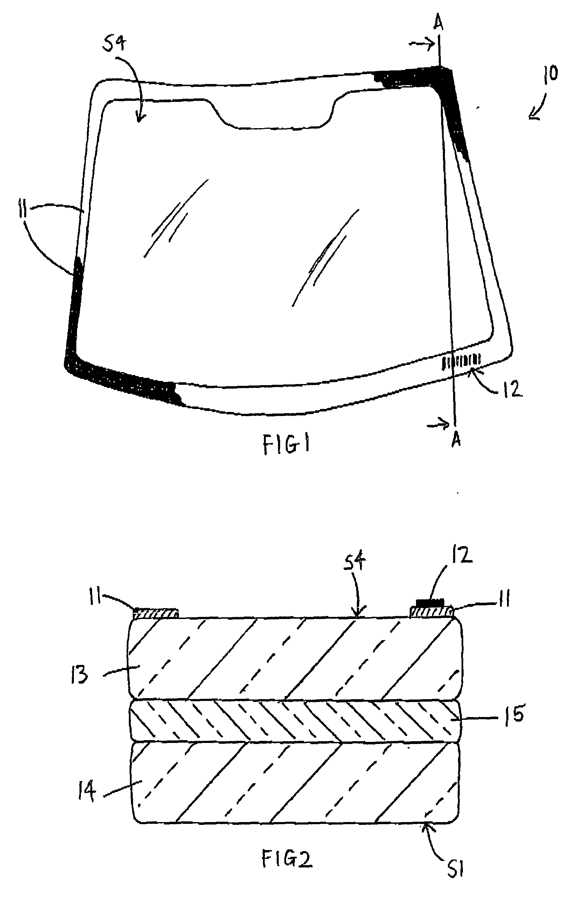

Figure 1 shows a vehicle glazing according to the invention, in the form of a windscreen 10. Around the periphery of windscreen 10 there is a solid band of opaque ink, in the form of an obscuration band 11. Obscuration band 11 is there to disguise and protect the sealant (not shown) that is used to fix the window into a vehicle (not shown). Printed on a surface of windscreen 10 so as to coincide with obscuration band 11 there is an information-containing print, in the form of a bar code 12. Bar code 12 lies within the area of obscuration band 11.

Obscuration band 11 is screen-printed in a glossy opaque ink in the form of glossy black enamel on surface 4 of windscreen 10 (for clarity only a portion of obscuration band 11 is shown as being black in colour). One such enamel is 1T55M050 currently available from Johnson Matthey B.V., Fregatweg 38, 6222 NZ Maastricht, The Netherlands (www.matthey.com). Bar code 12 is digitally printed, specifically ink-jet printed, upon the surface of obscuration band 11. The ink-jet printer (A400 model) and corresponding matt ink-jet ink used to print bar code 12 are currently available from Domino UK Limited, Trafalgar Way, Bar Hill, Cambridge, England, CB23 8TU (www.domino-printing.com). Bar code 12 and obscuration band 11 are both printed in a black coloured ink; bar code 12 is substantially invisible against background obscuration band 11, even though obscuration band 11 is glossy in appearance but bar code 12 is dull in appearance. Bar code 12 is encoded according to EAN-13.

Figure 2 provides more detail about the construction of windscreen 10 in that it comprises outer pane of glazing material, in the form of a pane of clear soda-lime-silica glass 14 and inner pane of glazing material, also in the form of a pane of clear soda-lime-silica glass 13. Inner pane 13 is provided with obscuration band 11 on its outer surface (surface 4, S4), and bar code 12 is provided upon band 11. It is possible (although not shown) that the inner surface (surface 2) of outer pane 14 or inner surface (surface 3) of inner pane 13 could also be provided with a further obscuration band in register with band 11. Interleaved between outer pane 14 and inner pane 13 is a ply of interlayer material, in the form of a ply of polyvinyl butyral 15 (although any other suitable interlayer material known in the art may be used), which joins the glass panes together.

As an example, windscreen 10 may be produced by firstly cutting each of panes 13, 14 to the desired size and shape. Subsequently, the outer surface of inner pane 13 may be screen-printed with enamel to form obscuration band 11. Both panes 13,14 may then be subjected to a bending process, which may simultaneously fire the screen-printed enamel. Post-bending, PVB ply 15 may be interleaved between panes of glass 13,14 and the resultant composite may be processed for lamination and then put into an autoclave and laminated. Subsequent to lamination, bar code 12 may be ink-jet printed onto the surface of obscuration band 11 and allowed to air-dry. Windscreen 10 may then be finally washed in preparation for sale.

Surprisingly windscreen 10, and importantly bar code 12, successfully passes a vehicle manufacturer's environmental temperature-cycling test. This test involves cycling the temperature (T) of a climatic chamber in which windscreen 10 is held between T > -30°C and T < 70°C over a period of 12 hours. Bar code 12 remains intact and readable by a bar code scanner. A suitable bar code scanner that is able to retrieve information from windscreen 10 is Symbol Technology laser scanner LS3408-FZ currently available from Motorola Inc., EMEA Division, Symbol Place, Winnersh Triangle, Berkshire, England, RG41 5TP.

Despite all indications and teachings to the contrary (i.e. for high contrast between a bar code and the surface on which it is printed, usually achieved by providing a black-coloured bar code on a white background), it is possible to read a black-coloured bar code printed on a black background, for example with the scanner described above. It is believed to work because the surface of obscuration band 11 is a specularly reflecting one (it is glossy) whereas the surface of bar code 12 is a scattering one (it is matt/dull). Thus when the scanner is passed over the surface of bar code 12, and particularly when it is at a certain angle to the surface on which bar code 12 is printed, only scattered light from bar code 12 is collected by the scanner because specularly reflected light from obscuration band 11 is at an angle such that it is not collected by the scanner.

## Claims

1. A vehicle glazing comprising:
at least one pane of glazing material having a band of opaque ink printed on one of its surfaces adjacent at least one of its edges, and an information-containing print, printed on a surface of the glazing so as to coincide with the band of opaque ink, which is substantially invisible against the opaque ink.

2. A vehicle glazing as claimed in claim 1 wherein both the opaque ink and the information-containing print ink are black in colour.

3. A vehicle glazing as claimed in claim 1 or claim 2 wherein the information-containing print is in the form of a machine-readable bar code.

4. A vehicle glazing as claimed in any preceding claim wherein the band of opaque ink is a screen-print.

5. A vehicle glazing as claimed in any preceding claim wherein the information-containing print is a digital print.

6. A vehicle glazing as claimed in any preceding claim wherein the pane of glazing material is a pane of soda-lime-silica glass which may be clear or body-tinted.

7. A vehicle glazing as claimed in any preceding claim in the form of a monolith wherein the information-containing print is printed upon the surface of the band of opaque ink.

8. A vehicle glazing as claimed in any of claims 1 to 6 in the form of a laminate comprising at least one further pane of glazing material, wherein the information-containing print and the band of opaque ink are printed on separate panes of glazing material, such that when paired, the information-containing print coincides with and lies within the area of the band of opaque ink.

9. A vehicle glazing as claimed in claim 8 wherein the information-containing print is printed on surface 4 of the laminate.

10. A vehicle glazing as claimed in any of claims 1 to 7 comprising at least one further pane of glazing material to form a laminate, wherein the information-containing print is printed upon the surface of the band of opaque ink.

11. A vehicle glazing as claimed in claim 10 wherein both the information-containing print and the band of opaque ink are printed on surface 4 of the laminate.

12. A vehicle glazing as claimed in any of claims 1 to 11 wherein the glazing is bent.

13. A method of providing a vehicle glazing with an information-containing print, the glazing comprising at least one pane of glazing material and the method comprising the steps of:
- printing a band of opaque ink on a surface of a pane of glazing material adjacent at least one of its edges; and
- printing an information-containing print on a surface of the glazing, so as to coincide with the band of opaque ink, using an ink that is substantially invisible against the opaque ink.

14. A method according to claim 13 wherein the band of opaque ink is screen-printed and the information-containing print is digitally printed.

15. A method according to claim 13 or claim 14 wherein both the opaque ink and the digitally printed ink are black in colour.

16. A method according to any of claims 13 to 15 wherein the information-containing print is in the form of a machine-readable bar code.

17. A method according to any of claims 13 to 16 wherein prior to screen-printing the band of opaque ink, the pane of glazing material is cut to a desired shape.

18. A method according to any of claims 13 to 17 wherein prior to digitally printing the information-containing print, the pane of glazing material is bent and/or tempered.

19. A method according to any of claims 13 to 18 wherein the glazing is a monolith and the information-containing print is digitally printed upon the surface of the band of opaque ink.

20. A method according to claim 19 wherein the monolithic pane of glazing material is paired with a further pane of glazing material to form a laminate.

21. A method according to any of claims 13 to 18 wherein the glazing is a laminate, and the band of opaque ink and the information-containing print are printed on separate panes of glazing material such that in the final laminate, the information-containing print coincides with and lies within the area of the band of opaque ink.

22. A method according to claim 20 or claim 21 wherein digital printing of the information-containing print occurs subsequent to autoclaving of the laminate.

23. A method according to any of claims 13 to 22 wherein ink-jet printing is used to digitally print the information-containing print.

24. A method of retrieving information from a vehicle glazing as claimed in any of claims 1 to 12 comprising the steps of:
- passing a device capable of reading printed information over the surface of the glazing in the region of the band of opaque ink;
- detecting the substantially invisible information-containing print comprised in the glazing; and
- reading the information contained in the information-containing print.

25. A method according to claim 24 wherein the device is a laser scanner.

26. A method according to claim 24 or claim 25 wherein the information-containing print is a bar code and the device is a bar code scanner.

27. A method according to claim 26 wherein the bar code is encoded according to EAN-13.

28. A method according to claim 26 or claim 27 wherein the bar code scanner comprises a 650 nm visible laser diode as its light source.

29. A substrate comprising:
an information-containing print provided on a surface of the substrate in a locating area designated for said print,
wherein the print is substantially invisible against the locating area.

30. A method of retrieving information from the substrate claimed in claim 29 comprising the steps of:
- passing a device capable of reading printed information over a surface of the substrate in the region of the locating area;
- detecting the substantially invisible information-containing print comprised in the substrate; and
- reading the information contained in the information-containing print.
